# EUROPÄISCHE PATENTSCHRIFT

(11) **EP 1 451 557 B1**
(45) Veröffentlichungstag und Bekanntmachung des Hinweises auf die Patenterteilung: **13.08.2008**
(21) Anmeldenummer: 02774382.2
(22) Anmeldetag: 17.09.2002
(51) Int. Cl.: G01N 21/55, B60S 1/08

(54) **REGENSENSOR, INSBESONDERE FÜR EIN KRAFTFAHRZEUG**
RAIN SENSOR, IN PARTICULAR FOR A MOTOR VEHICLE
DETECTEUR DE PLUIE, EN PARTICULIER POUR VEHICULE AUTOMOBILE

(30) Priorität: 27.11.2001 DE 10158097; 28.06.2002 DE 10229200
(43) Veröffentlichungstag der Anmeldung: 01.09.2004
(73) Patentinhaber: ROBERT BOSCH GMBH, 70442 Stuttgart (DE)
(72) Erfinder: SAUTTER, Helmut, 71254 Ditzingen (DE); JERGER, Armin, 77815 Buehl (DE); WOLF, Frank, 77815 Buehl (DE); HOCHENBLEICHER, Gerhard, 82256 Fürstenfeldbruck (DE); THOMINET, Vincent, CH-1110 Morges (CH); YANG, Zishao, 85435 Erdi (DE)
(86) Internationale Anmeldenummer: PCT/DE2002/003487
(87) Internationale Veröffentlichungsnummer: WO 2003/048748

(56) Entgegenhaltungen:
- EP-A- 0 736 426
- EP-A- 0 893 317
- DE-A- 3 825 663
- DE-A- 4 413 758
- DE-A- 19 541 312
- DE-A- 19 701 258
- DE-A- 19 943 887

## Beschreibung

### Stand der Technik

Die Erfindung betrifft einen Regensensor nach Gattung des unabhängigen Anspruchs.

Es sind schon zahlreiche Regensensoren, beispielsweise aus der DE 197 01 258 bekannt, bei denen die Strahlung eines Senders mittels eines holografisch ausgebildeten, diffraktiven Elementes in die Scheibe eines Kraftfahrzeuges eingekoppelt, auf der Außenseite der Scheibe totalreflektiert, und mittels eines weiteren diffraktiven Elementes auf einen Empfänger gerichtet oder fokussiert wird. Bei derartigen Sensoren sind die diffraktiven Elemente als Volumenphasenhologramme ausgebildet, die in Folien aus Fotopolymeren eingebracht sind.

EP 0893317 beschreibt einen Regensensor mit einen diffraktiven Element, an dem Strahlung minus erster Ordnung erzeugt wird.

Derartige Folien sind aufwändig zu fertigen, teuer in der Herstellung und problematisch in ihren Umwelteigenschaften.

### Vorteile der Erfindung

Der erfindungsgemäße Regensensor mit den Merkmalen des Hauptanspruchs hat den Vorteil, dass durch die linienartige Struktur des diffraktiven Elementes dieses kostengünstiger herzustellen ist und ein breiteres Materialspektrum angewendet werden kann. Weiterhin werden dadurch beispielsweise die Umwelteigenschaften verbessert. Darüber hinaus können größere sensitive Flächen vorgesehen werden, wodurch das Ansprechverhalten der Sensoreinheit verbessert wird.

Durch die in den Unteransprüchen aufgeführten Maßnahmen ergeben sich vorteilhafte Weiterbildungen und Verbesserungen der im Hauptanspruch angegebenen Merkmale.

Das Element beugt die Strahlung in eine erste und in eine minus erste Ordnung. Auf diese Weise werden zwei sensitive Flächen mit nur einem Sender erzielt, ohne die Strahlungsintensität erhöhen zu müssen. Dadurch können weiter Kosten eingespart und die Störungsempfindlichkeit weiter reduziert werden.

Ein besonders gutes Signal-Rausch-Verhältnis des Empfängersignals wird dadurch erzielt, dass das Element fokussierende Eigenschaften aufweist.

Ein besonders kompakter Sensor ergibt sich vorteilhafterweise, wenn ein weiteres Element vorgesehen ist, das teilweise als Retroreflektor ausgebildet ist. Auf diese Weise kann der Empfänger in der Nähe des Sender angeordnet werden oder der Sender gleichzeitig als Empfänger benutzt werden.

Ist mindestens ein Element und/oder ein weiteres Element als mehrschichtige Struktur ausgebildet, können auch komplexere Strahlenwege auf einfache Weise dargestellt werden.

Besonders vorteilhaft ist dabei, wenn ein Element mehrere Strukturen aufweist, die in einer Schicht überlagert sind.

Vorteilhafterweise sind die Elemente bzw. die weiteren Elemente auf der Scheibe des Kraftfahrzeugs angeordnet. Besonders vorteilhaft ist dabei, wenn die Beugungseffizienz eines Elementes von 20 - 80 %, insbesondere von 40 - 80 %, vorzugsweise zwischen 60 und 80 % liegen.

Besonders gute Signale können dadurch dargestellt werden, dass die Beugungseffizienz des Elementes kleiner als 100 %, insbesondere kleiner als 90, vorzugsweise kleiner als 85% ist.

In einer besonders preiswerten Ausgestaltung des Regensensors weist dieser mehr Empfänger als Sender auf, da die Sender kostenintensiver als die Empfänger sind.

Darüber hinaus ermöglichen mehrere Empfänger eine intelligentere Signalauswertung und damit eine verbesserte Anpassung der Wischergeschwindigkeit an die Regenintensität.

### Zeichnungen

Verschiedene Ausführungsbeispiele sind in den Zeichnungen dargestellt und in der nachfolgenden Beschreibung näher erläutert. Es zeigen:
Figur 1 einen Regensensor in einer schematischen Querschnittsdarstellung gemäß dem Stand der Technik,
Figur 2 einen erfindungsgemäßen Sensor,
Figur 3 einen Strahlungsverlauf durch ein diffraktives Element in einer schematischen Querschnittsdarstellung,
Figur 4 eine Variation des Strahlungsverlaufs aus Figur 3,
Figur 5 einen Strahlungsverlauf wie in Figur 4, jedoch mit mehrschichtigem diffraktiven Element,
Figur 6 eine mögliche Anordnung der diffraktiven Elemente eines Sensors gemäß Figur 2 und
Figur 7 eine weitere Anordnung der diffraktiven Elemente in einer Variation aus Figur 6.

### Beschreibung der Ausführungsbeispiele

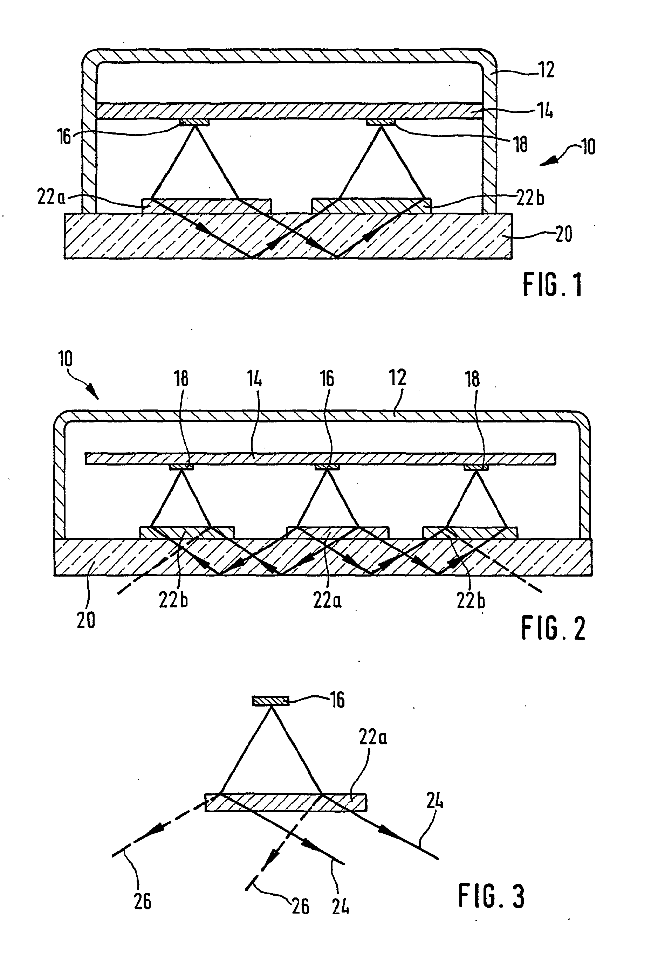

In Figur 1 ist ein Regensensor 10 in einer schematischen Querschnittsdarstellung gezeigt. Dieser besteht im Wesentlichen aus einem Gehäuse 12, in dem eine Leiterplatte 14 angeordnet ist. Die Leiterplatte 14 trägt einen Sender 16 und einen Empfänger 18, die als Halbleiterbauelemente in SMD-Technik ausgebildet sind. Das Gehäuse 12 sitzt auf einer Scheibe 20, beispielsweise der Windschutzscheibe eines Kraftfahrzeugs und ist auf ihr befestigt. Dies kann beispielsweise durch Kleben erfolgen, aber auch Halteelemente wie Nuten oder Nasen, die auf oder in der Scheibe 20 angeordnet sind und mit Befestigungselementen des Gehäuses 12 zusammenwirken, sind möglich.

Auf die Scheibe 20 sind diffraktive Elemente 22a, 22b aufgeklebt, die aus einer Folie bestehen, welche mit einem holographischen Liniengitter versehen ist. Eines der diffraktiven Elemente 22a ist in dem Bereich auf der Scheibe 20 angeordnet, in dem die Strahlung des Senders 16 unmittelbar auf die Scheibe 20 trifft. Die Folie 22a ist hierbei derart ausgebildet, dass sie die Strahlung des Senders 16 in die Scheibe 20 hineinkoppelt und zwar so, dass die Strahlung an der dem Regensensor 10 abgewandten, sauberen und trockenen Glas-Luft-Grenzfläche totalreflektiert wird.

Das zweite diffraktive Element 22b ist an der Stelle der Scheibe 20 angeordnet, an der die Strahlung des Senders 16 aus der Scheibe 20 nach der Totalreflexion austritt. Das Liniengitter ist dabei derart gewählt, dass die totalreflektierte Strahlung zum Empfänger 18 gelenkt, insbesondere fokussiert wird.

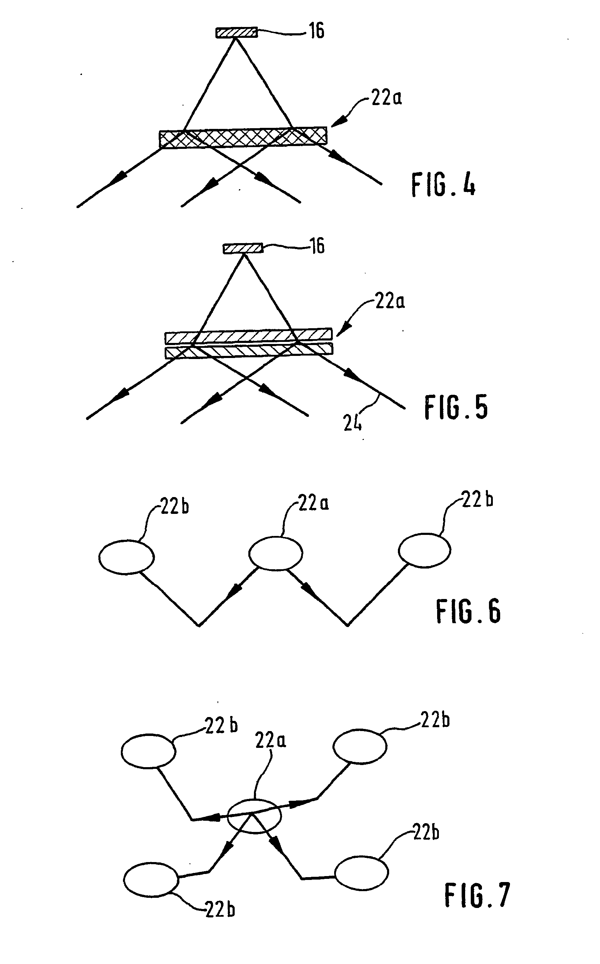

In Figur 2 ist ein Ausführungsbeispiel der Erfindung dargestellt. Im Gehäuse 12 sind hier ein Sender 16 und zwei Empfänger 18 auf der Leiterplatte 14 angeordnet. Im Bereich des Senders 16 ist auf der Scheibe 20 das diffraktive Element 22a mit einem Liniengitter angeordnet. Das Liniengitter ist wiederum derart ausgebildet, dass die Strahlung des Senders 16 in die 1. und -1. Beugungsordnung gelenkt wird. Dazu entsprechend sind die weiteren diffraktiven Elemente 22b im Bereich der Empfänger 18 angeordnet, derart, dass das Licht aus der 1. bzw. -1. Beugungsordnung auf den Empfänger 18 gelenkt wird. Durch eine geeignete Wahl des Elementes 22a können auch kreuzförmige Meßstrecken realisiert werden (Fig. 7)

In Figur 3 sind der Sender 16 und das diffraktive Element 22a aus Figur 2 detailliert dargestellt. Das diffraktive Element 22a ist als Hologrammfolie mit einem Liniengitter derart ausgebildet, das die vom Sender 16 senkrecht auf die Hologrammfolie einstrahlende Strahlung in die erste Ordnung 24 und die minus erste Ordnung 26 gebeugt wird. Dieser Effekt der Beugung am Gitter ist in der Physik allgemein bekannt und in zahlreichen Lehrbüchern beschrieben. Erste und minus erste Beugungsordnung haben dabei dieselbe Intensität. In Transmissionsrichtung, also in gerader Richtung vom Sender 16 aus gesehen, liegt die nullte Ordnung, in die gegebenenfalls auch keine Intensität fließen kann.

Empfängerseitig ist das diffraktive Element 22b so gestaltet, dass nur das Licht der ersten Ordnung zu den Empfängern 18 geleitet wird und die anderen Ordnungen, also die minus erste Ordnung oder höhere Ordnungen, ausgeblendet werden. Dies ist beispielsweise durch die Verwendung geblazter Gitter oder sogenannter holografischer Linsen möglich.

Die diffraktiven Elemente 22a, 22b können darüber hinaus besondere fokussierende Eigenschaften besitzen, beispielsweise um das divergente, kegelförmige Strahlbündel des Senders 16 in ein solches mit zylindrischem Querschnitt zu verwandeln. Bei derartigen diffraktiven Elementen 22a ist die minus erste Ordnung 26 unter Umständen divergent und wird mittels geeigneter weiterer Maßnahmen ebenfalls als Nutzstrahlung verwendet .

In den Figuren 4 und 5 ist eine Variation aus Figur 3 dargestellt. Das diffraktive Element 22a besteht hier aus einer Überlagerung von zwei jeweils um 180 Grad gegeneinander verdrehten gebeugten Strukturen, von denen jede überwiegend in die erste Ordnung beugt. In Figur 4 sind beide Strukturen in einer Schicht überlagert. Dies kann beispielsweise durch Doppelbelichtung eines Hologramms erzielt werden. Wie in Figur 5 gezeigt, können diese beiden Strukturen jedoch auch in getrennten Schichten erzeugt werden und anschließend beispielsweise aufeinander laminiert werden. So entstehen zwei in entgegengesetzter Richtung gebeugte, in gewünschter Weise fokussierende Teilstrahlen der 1. Ordnung. Die ebenfalls vorhandenen Strahlen der minus ersten Ordnung werden hierbei nicht ausgenützt. In Figur 6 ist eine Anordnung von diffraktiven Elementen 22a, 22b gezeigt. Der Weg der Strahlung des Senders 16 ist durch die Pfeile schematisiert eingezeichnet. Das mittlere diffraktive Element 22a ist im Bereich des hier nicht gezeigten Senders 16 angeordnet und beugt die Strahlung in der ersten Ordnung über die nicht eingezeichnete totalreflektierende Glas-Luft-Grenzfläche zu den äußeren Empfängern 18.

In Figur 7 ist eine Variation der in Figur 6 gezeigten Anordnung dargestellt. Hier sind fünf diffraktive Elemente 22 gezeigt. Vier dieser fünf diffraktiven Elemente 22a, 22b sind in Form eines Quadrates angeordnet, in dessen Zentrum das fünfte diffraktive Element 22a angeordnet ist. Im Bereich des fünften diffraktiven Elementes 22a ist der Sender (nicht eingezeichnet) angeordnet, welcher die Strahlung in die vier äußeren diffraktiven Elemente 22b leitet. Die äußeren, im Bereich der Empfänger 18 angeordneten diffraktiven Elemente 22b können natürlich auch in Form eines Rechtecks, in Form einer Raute, aber auch in Form eines Dreiecks oder einer anderen geometrischen Form angeordnet sein. Im zentralen diffraktiven Element 22a des Senders 16 sind jedoch so viele Linienstrukturen überlagert, wie Empfänger 18 vorhanden sind.

Prinzipiell können hier auch die Elemente 22b als Retroreflektor ausgebildet sein und die Strahlung in den Bereich des Senders zurückstrahlen, wo dann der Empfänger 18 angeordnet ist. Darüber hinaus können die Elemente 22b die Strahlung auch in Richtung eines gemeinsamen Empfängers 18 leiten, so daß beispielsweise zwei nebeneinander angeordnete Elemente 22b die Strahlung auf einen gemeinsamen Empfänger 18 lenken.

## Patentansprüche

1. Regensensor, insbesondere für ein Kraftfahrzeug, mit mindestens einem Strahlung abgebenden Sender (16), mindestens einem, die Strahlung des Senders (16) empfangenden Empfänger (18) und mindestens einem, im Bereich des Senders angeordneten, holographisch ausgebildeten diffraktiven Element (22a, 22b), **dadurch gekennzeichnet, daß** das Element (22a, 22b) eine liniengitterartige Struktur aufweist und die Strahlung in eine erste und eine minus erste Ordnung beugt, und daß mehr Empfänger (18) als Sender (16) vorgesehen sind.

2. Regensensor nach Ansprüch 1, **dadurch gekennzeichnet, daß** das Element (22a, 22b) fokussierende Eigenschaften aufweist.

3. Regensensor nach einem der vorhergehenden Ansprüche, **dadurch gekennzeichnet, daß** mindestens ein weiteres Element (22a, 22b) vorgesehen ist, das zumindest teilweise als Retroreflektor ausgebildet ist.

4. Regensensor nach einem der vorhergehenden Ansprüche, **dadurch , gekennzeichnet, daß** mindestens ein Element (22a, 22b) und/oder ein weiteres Element (22a, 22b) eine mehrschichtige Struktur aufweist.

5. Regensensor nach einem der vorhergehenden Ansprüche, **dadurch gekennzeichnet, daß** mindestens ein Element (22a, 22b) und/oder ein weiteres Element (22a, 22b) mehrere Strukturen aufweist, die in einer Schicht überlagert sind.

6. Regensensor nach einem der vorhergehenden Ansprüche, **dadurch gekennzeichnet, daß** mindestens ein Element (22a, 22b) und/oder mindestens ein weiteres Element (22a, 22b) in und/oder auf einer Scheibe eines Kraftfahrzeugs angeordnet sind.

7. Regensensor nach einem der vorhergehenden Ansprüche, **dadurch gekennzeichnet, daß** ein Element (22a, 22b) und/oder ein weiteres Element (22a, 22b) eine Beugungseffizienz von 20 bis 80 Prozent, insbesondere von 40 bis 80 Prozent, vorzugsweise von 60 bis 80 Prozent aufweist.

8. Regensensor nach Anspruch 7, **dadurch gekennzeichnet, daß** die Beugungseffizienz des Elements (22a, 22b) und/oder des weiteren Elements kleiner als 100 Prozent, insbesondere kleiner als 90 Prozent, vorzugsweise kleiner als 85 Prozent ist.

## Claims

1. Rain sensor, in particular for a motor vehicle, having at least one transmitter (16) which emits radiation, at least one receiver (18) which receives the radiation from the transmitter (16) and at least one holographic diffractive element (22a, 22b) which is arranged in the range of the transmitter, **characterized in that** the element (22a, 22b) has a structure in the form of a line grating and diffracts the radiation into a first order and a negative first order, and **in that** more receivers (18) than transmitters (16) are provided.

2. Rain sensor according to Claim 1, **characterized in that** the element (22a, 22b) has focusing properties.

3. Rain sensor according to one of the preceding claims, **characterized in that** provision is made of at least one further element (22a, 22b) which is at least partially in the form of a retroreflector.

4. Rain sensor according to one of the preceding claims, **characterized in that** at least one element (22a, 22b) and/or a further element (22a, 22b) has/have a multilayer structure.

5. Rain sensor according to one of the preceding claims, **characterized in that** at least one element (22a, 22b) and/or a further element (22a, 22b) has/have a plurality of structures which are superimposed in a layer.

6. Rain sensor according to one of the preceding claims, **characterized in that** at least one element (22a, 22b) and/or at least one further element (22a, 22b) is/are arranged in and/or on a window of a motor vehicle.

7. Rain sensor according to one of the preceding claims, **characterized in that** an element (22a, 22b) and/or a further element (22a, 22b) has/have a diffraction efficiency of 20 to 80 per cent, in particular of 40 to 80 per cent, preferably of 60 to 80 per cent.

8. Rain sensor according to Claim 7, **characterized in that** the diffraction efficiency of the element (22a, 22b) and/or of the further element is less than 100 per cent, in particular less than 90 per cent, preferably less than 85 per cent.

## Revendications

1. Capteur de pluie notamment pour un véhicule automobile comportant au moins un émetteur (16) émettant un rayonnement, au moins un récepteur (18) recevant le rayonnement de l'émetteur (16) et au moins un élément diffractant (22a, 22b) holographique, dans la région de l'émetteur,
**caractérisé en ce que**
l'élément (22a, 22b) a une structure en forme de réseau linéaire et il dévie le rayonnement dans un premier ordre et dans un premier ordre négatif et **en ce qu'**il y a plus de récepteurs (18) que d'émetteurs (16).

2. Capteur de pluie selon la revendication 1,
**caractérisé en ce que**
l'élément (22a, 22b) a des caractéristiques de focalisation.

3. Capteur de pluie selon l'une des revendications précédentes,
**caractérisé par**
au moins un autre élément (22a, 22b) réalisé au moins en partie comme rétroréflecteur.

4. Capteur de pluie selon l'une des revendications précédentes,
**caractérisé par**
au moins un élément (22a, 22b) et/ou un autre élément (22a, 22b) ayant une structure à plusieurs couches.

5. Capteur de pluie selon l'une des revendications précédentes,
**caractérisé par**
au moins un élément (22a, 22b) et/ou un autre élément (22a, 22b) ayant plusieurs structures superposées dans une couche.

6. Capteur de pluie selon l'une des revendications précédentes,
**caractérisé en ce qu'**
au moins un élément (22a, 22b) et/ou au moins un autre élément (22a, 22b) est installé dans et/ou sur une vitre d'un véhicule automobile.

7. Capteur de pluie selon l'une des revendications précédentes,
**caractérisé en ce qu'**
un élément (22a, 22b) et/ou un autre élément (22a, 22b) présente un rendement de diffraction de 20 %-80 % notamment de 40 %-80 % et de préférence de 60 %-80 %.

8. Capteur de pluie selon la revendication 7,
**caractérisé en ce que**
le rendement de diffraction de l'élément (22a, 22b) et/ou un de l'autre élément est inférieur à 100 % notamment inférieur à 90 % et de préférence inférieur à 85 %.
